# EUROPEAN PATENT SPECIFICATION

(11) **EP 3 746 575 B1**
(45) Date of publication and mention of the grant of the patent: **30.04.2025**
(21) Application number: 19706321.7
(22) Date of filing: 22.01.2019
(51) Int. Cl.: C22B 1/00, C22B 3/44, C22B 7/00, C22B 3/00, C22B 26/12

(54) **HYDROMETALLURGICAL PROCESS FOR THE TREATMENT OF LITHIUM BATTERIES AND RECOVERY OF THE METALS CONTAINED THEREIN**
HYDROMETALLURGISCHES VERFAHREN ZUR BEHANDLUNG VON LITHIUMBATTERIEN UND ZUR RÜCKGEWINNUNG DER DARIN ENTHALTENEN METALLE
PROCÉDÉ HYDROMÉTALLURGIQUE POUR LE TRAITEMENT DES BATTERIES AU LITHIUM ET LA RÉCUPÉRATION DES MÉTAUX QU'ELLES CONTIENNENT

(30) Priority: 30.01.2018 IT 201800002175
(43) Date of publication of application: 09.12.2020
(73) Proprietor: Haiki Cobat S.p.A. Societa' Benefit, 00185 Roma (RM) (IT)
(72) Inventor: VIZZA, Francesco, 50141 Firenze (IT); HAMISH, Andrew Miller, 50143 Firenze (IT); FOLLIERO, Maria Gelsomina, 70024 Gravina in Puglia (IT); MARCHIONNI, Andrea, 51031 Agliana (IT); FILIPPI, Jonathan, 59100 Prato (IT)
(74) Representative: Santi, Filippo
(86) International application number: PCT/IT2019/050013
(87) International publication number: WO 2019/150403

(56) References cited:
- EP-A1- 1 760 821
- EP-A1- 2 811 040
- US-A1- 2011 059 339
- XU ET AL: "A review of processes and technologies for the recycling of lithium-ion secondary batteries", JOURNAL OF POWER SOURCES, ELSEVIER SA, CH, vol. 177, no. 2, 14 January 2008 (2008-01-14), pages 512 - 527, XP022450299, ISSN: 0378-7753, DOI: 10.1016/J.JPOWSOUR.2007.11.074

## Description

### Field of the invention

The present invention relates to the end-of-life treatment of energy storage devices based on lithium technology. In particular, the invention relates to a hydrometallurgical process for the treatment at the end of life of said energy storage devices, for the separation of their components and the recovery of the metals contained therein.

### Prior art

It is known that, thanks to their particular characteristics, such as the high energy and power density in small volumes, lithium batteries have become the most used power supply system for portable electronics devices. As a result, the massive and ubiquitous presence of rechargeable lithium batteries in portable consumer electronic devices, such as mobile phones, tablets and laptops, and the expected rapid growth in the number of vehicles based on electric engines (EV) and hybrid engines (HEV), represents a significant challenge for the correct disposal and recovery of valuable materials contained in lithium cells. In fact, it is expected that the automotive lithium cell market can reach revenues of about 30 billion dollars in 2022, equal to about half of the total volume of lithium batteries (about 60 billion dollars), with a 30% annual growth starting from 2016. As far as portable devices are concerned, about 2 billion smartphones, 250 million tablets and 400 million portable PCs are put on the market every 20 months, with numbers constantly growing. Almost 30% of all the world production of lithium (about 35000 tons) is currently used for the production of lithium batteries.

With the increase in production and use of these batteries, the development of industrial processes capable of allowing their disposal and recovery is becoming increasingly important. In particular, these processes should be as responsive as possible to the concept of sustainability, including economic, environmental and social assessments^{1,2}.

Lithium-ion batteries (cells) are storage devices of an electrochemical form of energy, consisting of an anode, a separator and a cathode. The anode is generally constituted by elemental lithium reversibly intercalated in the interplanar spaces of the crystalline lattice of high crystallinity carbononium materials (for example graphite); the separator consists of a polymeric membrane (generally polypropylene or polyvinylidene difluoride, PVDF) permeable to lithium ions; the electrolyte consists of a lithium salt (generally lithium salts soluble in an organic environment such as, for example, LiBF₄ or LiPF₆) dissolved in an organic aprotic solvent, with a wide electrochemical stability window (such as diethylcarbonate), but also with non-negligible characteristics of volatility and flammability; the cathode, on the other hand, is generally made up of oxides or insoluble salts of transition metals, capable of reversibly intercalating the lithium in their crystalline lattice, such as, for example, LiCoO₂, LiFePO₄ and various mixed oxides such as LiCoₓNi_{y}Mn_{z}O₂. There is also a binder that allows the perfect adhesion of the powders constituting the two electrodes to the aluminum and copper, metal collectors, respectively to the cathode and to the anode. Externally, there may be an electronic management system, often referred to as BMS.

The presence of elementary lithium, flammable volatile organic solvents and high energy density, poses serious risks for the safety of the operators during the treatment of the batteries in the waste cycle or in their recovery. Elemental lithium, if exposed to air, is able to react violently with oxygen producing a lot of heat and causing violent vaporizing or, in some cases, ignition of organic solvents present in the electrolyte. In addition, some materials present in the batteries, such as LiCoO₂, can decompose and release elemental oxygen, if exposed to high heat sources, further increasing the risk of fire or explosion. Finally, disassembly can generate accidental short circuits that also entail risks of fire or explosion.

Currently, according to the prior art, the methods of securing lithium batteries at the end of their life can be grouped into three main categories: i) reduction of the residual charge³⁻⁸; ii) heat treatments¹³⁻¹⁵ and iii) mechanical treatments in controlled environments^{9,10}.

The discharge of the batteries (or reduction of the residual charge) can be obtained by various methods, in particular: i) by immersing the cells in a conductive electrolytic solution³⁻⁶; ii) by manual discharge via a dedicated device^{7,8.}

The heat treatments, on the other hand, can exploit the heat, to evaporate the flammable organic solvents, obtaining their removal, or otherwise they can use cryogenic liquids (such as liquid nitrogen) to drastically reduce their reactivity¹³⁻¹⁵.

Finally, the methods that operate in a controlled environment reduce the risks, operating in an inert atmosphere^{9,10}, or in the presence of large quantities of water^{11,12}.

Each of the methods previously listed presents, however, some disadvantages.

The reduction of the residual charge by immersion in conductive solutions, often composed of solutions of NaCl^{3,4,17}, NaOH¹⁹ or FeCl₃¹⁸, can be prevented by the presence of BMS. In addition, this method can generate the production of toxic gases (such as chlorine) and sludges containing heavy metals, resulting from corrosion reactions of the external hull terminals. Moreover, due to this corrosion, the solution can contain a quantity of non-negligible lithium ions and therefore a significant loss of lithium to be recovered.

The securing of the cells by manual discharge, obtainable by means of dedicated devices⁷ or by short-circuiting, is exempt from the problems described above, but requires the intervention of an operator and the use of suitable devices, entailing high processing costs and dedicated personnel

Thermal treatments for the removal of organic solvents present high costs, due to heating and, above all, they present the need to reduce the emissions of highly toxic gases, such as CO, HF and PFs, deriving from the decomposition of the polymeric separators and of the and binder^{20, 21}. The heat treatment, however, is not completely free of risks: in fact, it is possible to generate explosions, since the heating can lead to an increase in pressure inside the cells, in the event that the vent valve is faulty.

The use of cryogenic liquids presents, in addition to the high cost thereof, also safety problems for operators, such as the risk of asphyxiation and burns.

Processes operating in a controlled environment employ appropriate gases, such as nitrogen or carbon dioxide, to deprive of oxygen the environment in which batteries are fragmented. Alternatively, it is possible to use high amounts of water as a means of dispersing heat, avoiding the generation of flames. The first processes are affected by problems of operator safety and by a high cost of management, while the latter produce a large quantity of wastewater, to be treated appropriately, and introduce a further phase of separation of materials^{9-12,16}.

Many patents, based on hydrometallurgical^{13,22-27} and metallurgical^{20,28} processes, describe how to operate on the set of powders, foils and plastic materials, which make up the so called black mass, obtained by disassembling the cells. Other patents, instead, report the treatment of the cathodic powder fraction, omitting the description of obtaining these materials^{24,25,29,30}.

According to the prior art, processes for the separation of the anodic and cathodic metal collectors (copper and aluminum) from the active materials adhered thereto are described, to allow a more efficient recovery of the same.

In the present description, the methods of detachment of the collectors from the active materials have been classified and subdivided into thermal, physical or wet processes. In the methods of thermal separation, the binder and the separating membrane are pyrolyzed in air or in an inert atmosphere, at temperatures in the range of 300 to 800 °C. This treatment degrades the binder, facilitating the detachment of active powder from metal collectors, preventing them from being compromised^{3, 31-35}. This system has the disadvantage due to the production of toxic gases such as HF, CO and PF₅, especially in the presence of traces of moisture. These gases require an adequate abatement system, which affects the costs of installation and processing.

Physical detachment methods use mills, cyclones and magnetic separations, followed by densimetric or aerodynamic processes^{11,14,36-38}. In spite of their intrinsic immediacy, as far as industrial applicability is concerned, a limitation of these methods is due to the fact that the separation is not complete and that, therefore, part of the powder containing the active metals remains attached to the collectors.

In methods in wet conditions, the internal components of the cells are put in contact, under mechanical or ultrasonic agitation, with a liquid agent, able to dissolve or weaken the action of the binder. Some methods include the use of organic solvents such as N-dimethyl formamide (DMF)³⁹, N-methyl pyrrolidone (NMP)⁴⁰⁻⁴³, or other solvents^{3,44,45} for the dissolution of the binder, assisted by stirring^{3,39,41}, or ultrasounds^{3,6,40}. Although the separation is more efficient than methods in dry conditions, the solvents normally used are often toxic, expensive and can not be reused over several cycles due to increased solvent viscosity.

Other techniques according to the prior art are based on the surface or total dissolution of the collectors, through the use of acids⁴⁶⁻⁵⁰ or alkalis⁵¹⁻⁵³. These techniques can, however, lead to contamination of the phase of the powders with salts coming from the etching of the collectors.

Following separation, the resulting material is mainly composed of the powders of the electrode materials and can be treated with metallurgical or hydrometallurgical methods. In metallurgical processes, the exhausted cells are generally incinerated, with the aim of destroying plastics, solvents, separators and carbonaceous materials. Following this, the materials are generally recovered as molten metals^{20,29,40}, or by the electrolysis of molten salts^{3,11,23}.

The hydrometallurgical methods provide for the dissolution (leaching) of metals and metal oxides in acid or alkaline solution. In the formulation of acid etching mixtures, a reducing agent is often included, to facilitate the solubilization of metal oxides with high oxidation states (such as, for example, cobalt III oxides). Many methods use sulfuric or hydrochloric acid, in combination with a reducing compound, such as H₂O₂^{13,17,22,30,35,50,60,61} citric acid⁶², sodium thiosulfate or sugars⁹.

From this solution, commonly referred to as liquor, metals can be separated by precipitation^{6,9,12,17,24,27,31,38,49,54,55,57,58}, extraction in organic solvents^{9,23,59}, electroreduction^{13,31}, combinations of these techniques^{5,9,13,55} or can be used to re-produce cathode materials for batteries^{17,37,41,42,54,56,60}**.**

In this context is inserted the solution according to this invention, which aims to provide a process for the treatment of lithium batteries, designed to overcome the critical issues that plague the processes according to the prior art of recovery of metals contained therein.

These and other results are obtained according to the present invention by proposing a process based on hydrometallurgical techniques, applicable to various types of lithium batteries, regardless of their internal chemistry and the physical dimensions of the batteries themselves.

In particular, the method for treatment of lithium batteries and recovery of the metals contained therein according to the present invention comprises the following steps: completely discharging the single cells by immersion in a conductive solid material, so that the disassembly of the batteries can be conducted in safe conditions; removal of the active materials from metal collectors, non-destructive to the latter, by immersing the black mass in a solution of a weak organic acid; dissolving (by leaching) metals from active powder by using inorganic acids in combination with organic acids having reducing properties; separation of lithium from the other metals present in the liquor, by precipitation of the latter, by using sodium or potassium sulphide; recovery of lithium, by precipitation as carbonate.

The object of the present invention is therefore to provide a hydrometallurgical process for the treatment of lithium batteries and the recovery of the metals contained, which allows to overcome the limits of the processes according to the prior art and to obtain the previously described technical results.

A further object of the invention is that said hydrometallurgical process can be carried out with substantially contained costs.

Not least object of the invention is to propose a hydrometallurgical process for the treatment of lithium batteries and recovery of the metals contained therein that is simple, safe and reliable.

It is therefore a specific object of the present invention a hydrometallurgical process for the treatment of lithium batteries and recovery of the metals contained therein comprising the following steps:
- completely discharging the single cells by immersion in a conductive solid material;
- separating black mass from metal shells,
- removing active powder from metal collectors and from separating membranes, non-destructive to the latter, by immersion of black mass in an aqueous solution of a weak organic acid;
- recovering and separating metal collectors and separating membranes from active powder by sieving;
- dissolving, by leaching, the metals from active powder by using a detachment acid solution, by adding a stronger acid; heating and subsequent filtration of the leachate to remove insoluble parts;
- precipitation of the transition metals contained in the leachate as sulfides by adjusting the pH and adding a solution of a source of sulfide ions, preferably an alkaline sulfide;
- filtering, washing and recovering the precipitate;
- acidification of the lithium solution with strong acids, evaporation and precipitation of sodium and potassium salts;
- filtering sodium and potassium salts to obtain only lithium in the solution;
- lithium precipitation as lithium carbonate, by adding an alkaline carbonate;
- washing the lithium carbonate precipitate with hot water to obtain a purified product.

Preferably, according to the present invention, said solid electric conductor is composed of copper, bronze, brass, iron or steel, aluminum, carbon.

In particular, according to the invention, said step of separating black mass from metal shells can be obtained by manual opening, grinding, cutting or fragmentation.

Moreover, according to the invention, said aqueous solution of a weak organic acid used in said step of removing active powder from metal collectors and from separating membranes is constituted by formic acid in a concentration range comprised between 0,5 and 8M in a concentration range comprised between 4:1 a 10:1 with respect to the black mass; preferably at a temperature comprised between 10 and 80°C, with stirring, for a period comprised between 30 and 240 minutes.

Preferably, according to the invention, said step of leaching provides for the addition of chloridric acid, in such an amount to reach a concentration comprised between 3 and 6M in solution, preferably at boiling temperature, for a period not shorter than 30min.

Always according to the present invention, in said step of precipitation of the transition metals, the pH of the solution can be adjusted within a range of 5 to 7 by the addition of a solution of an alkaline hydroxide in a concentration comprised between 10 and 30%, preferably operating at a temperature comprised between 20 and 80°C.

In particular, according to the invention, said step of acidification of the lithium solution with strong acids involves the pH change to a value lower than 2.

Finally, always according to the present invention, said step of precipitation of lithium as carbonate is operated at a temperature comprised between 70 °C and the boiling temperature.

It is evident the efficacy of the hydrometallurgical process for the treatment of lithium batteries and recovery of the metals contained therein of the present invention, which allows to overcome the limits present in the procedures according to the prior art, with regard to the safety of the cells before disassembling, the detachment of active powder from metal collectors, the leaching of active metals.

In particular, as far as the securing of cells before disassembling is concerned, the hydrometallurgical process for the treatment of lithium batteries and the recovery of the metals contained therein according to the present invention and the relative system provide a step of discharge of the cells by immersion in an electrically conductive solid, with the purpose of creating an electrical contact between the cell terminals. With respect to similar discharge processes according to the prior art (such as for example Chinese patent application No. CN1601805A), the hydro-metallurgical process according to the present invention does not require the use of a mixture of water and a conductive medium (coal, iron, copper), which on the one hand can make temperature control easier, but on the other hand would involve the problems related to the previously exposedl iquid discharge methods^{4,17-19}, ie the electrolytic corrosion with sludge formation and possible development of toxic gases, and furthermore, it would be necessary to wash the cells after treatment, to guarantee the elimination of traces of the conductive medium and to prevent the contamination of the internal components of the batteries subjected to subsequent treatments. The procedure according to the present invention, on the other hand, using only a solid dry conductive material, has the following advantages: i) lowering of the cell potential to values close to zero, an acceptable level to prevent the risks of explosion or fire, ii) absence of development of byproducts, and iii) absence of modifications of the conductive material, which is therefore reusable for numerous treatments.

With regard to the detachment of active powder from metal collectors, the process according to the present invention provides for the use of a weak organic acid with reducing properties, preferably formic acid, and consequently, compared to the methods present in literature, is able to overcome the problems related to the separation of dust-collectors for the following reasons: i) the corrosion of the collectors is extremely reduced, while maintaining the efficiency of the detachment process typical of treatments with more aggressive species⁴⁶⁻⁵³; ii) the costs of the reagents are limited compared to processes using known organic solvents^{3,39-45}; iii) the reproducibility and the efficiency of the detachment process are high compared to dry methods^{14,15,31-38}; iv) there is no need for a further separation of the active material from the detachment solution (with regard to this last point, one of the greatest potentials of this step consists in the possibility of exploiting the organic acid both for the detachment of active powder, both for its reducing characteristics in the subsequent step of leaching of active metals).

Finally, as far as the leaching of active metals is concerned, the etching formulation proposed in the process according to the present invention is composed of an organic acid with reducing characteristics, in combination with a strong inorganic acid, the process allowing the quantitative dissolution of all the metal species present in powder, with efficiencies comparable to acid etchings much more aggressive known in the prior art (for example aqua regia, HNO₃/HCl in ratio 1/3, H₂O₂/H₂SO₄), leaving as the only insoluble residue the carbon used in formulation of the electrodes. In this regard it should be noted that the organic acid used in the step of detachment of the powders from the collectors described above, is used as a reducing agent in this step of leaching.

The invention will be described below by way of illustration, but not by way of limitation, with particular reference to some illustrative examples, according to a preferred embodiment, with particular reference to the attached figure, which shows a block diagram of a plant for the execution of the hydrometallurgical process for the treatment of lithium batteries and recovery of the metals contained therein according to the present invention.

With reference to the figure, a plant for the execution of the hydrometallurgical process for the treatment of lithium batteries and the recovery of the metals contaimed therein according to the present invention comprises the following sections: a section for the complete discharge of the individual cells by immersion in a conductive solid material, so that the disassembly can be conducted in safe conditions; a section for the removal of active materials from metal collectors, non-destructive for the latter, by immersing the black mass in a solution of a weak organic acid; a section for dissolving (leaching) metals from active powder by using inorganic acids in combination with organic acids having reducing properties; a section for the separation of lithium from the other metals present in the "liquor" by precipitation of the latter through the use of sodium or potassium sulphide; and a lithium recovery section by precipitation as carbonate.

With regard to the complete discharge of the individual cells of the lithium batteries, the hydrometallurgical process for the treatment of lithium batteries and the recovery of the metals contained therein according to the invention provides that the batteries 1 reach a first station 2, where they are deprived of their control and protection circuits 3 (BMS), and are then sent to a discharge container 4 for discharge of the cells, wherein they are immersed in a solid electric conductor 5, i.e. a solid material, electrically and thermally conductive, for a minimum time equal to 2 hours, preferably between 24 and 48 hours. The term of the procedure can be identified by the sample measurement of the cell potentials or the absence of heat production inside the discharge container 4.

The cells, after being discharged, are disassembled and ground in a grinding station 6. After grinding, the metal shells 7 can be removed by means of separation methods which are part of the prior art. The remaining material, referred to as black mass 8, is mainly composed of active materials, supported on copper and aluminum collectors, and polymer separators.

The black mass 8 is then subjected to the step of separation of the active electrode materials (coal plus active metals) from the metal collectors into a powder/collector separation reactor 9. The process involves the treatment of the black mass with a solution of a weak acid 10 , in particular a weak organic acid (formic acid), in a concentration in the range 0.5-8M and stirred for 30-240 minutes at a temperature between 10 and 80°C and with a treatment solution/black mass ratio between 4:1 and 10:1 by weight. The optimal conditions identified for this step are: formic acid 3M, solution/black mass ratio of about 5:1, one hour of stirring at 60°C. This process is able to effectively remove the active materials from the copper and aluminum collectors, without appreciable dissolution of the latter. The humid mixture 11 of collectors and detached powders accumulates at the bottom of the separation reactor 9, from which it is sent to a sifter 11, where collectors and polymer membranes 12 are separated from the mixture 13 of carbonaceous powders containing the active metals in the solution of formic acid.

Collectors and polymeric membranes 11 are sent to a washing station 14, where they are subjected to washing with water 15, by which further amounts of carbonaceous particles containing active metals are separated, and then to a drying station 16, to be finally recovered.

The mixture 13 is sent to an etching reactor 17, where it is subjected to leaching, or chemical etching, by adding water 18 and a mineral acid 19, preferably hydrochloric acid. In this process, the presence of a weak organic acid, appropriately selected with reducing properties (for example formic acid), promotes the reduction of high-valence metal oxides, making them soluble. An amount of mineral acid is added to obtain a concentration between 3 and 6M, preferably 4M. The etching solution 20 is subjected to heating under stirring for 30-120 minutes, preferably boiling for 60 minutes. Once the etching process has been terminated, the obtained liquid liquor 21 is separated from the residues of insoluble carbon materials 22 by filtration in a filtering station 23. The insoluble phase 22 is mainly constituted by carbonaceous materials, which could possibly be recovered and used for other purposes. The liquid phase 21 contains ions of the metals present in the cathode material.

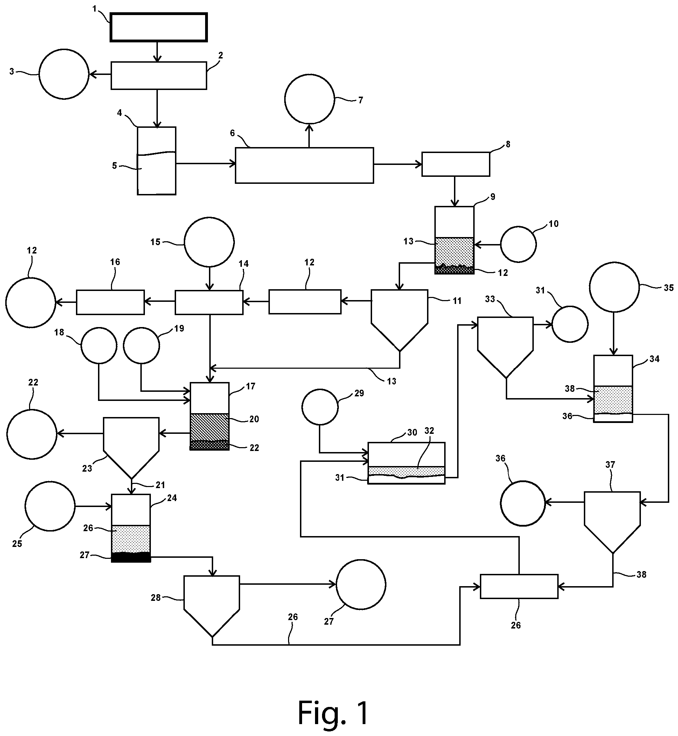

The separation of lithium from the liquor or liquid phase 21 is obtained by precipitation in a precipitation reactor 24. Initially, the pH of the liquor 21 is brought to a value between 5 and 7, by adding an aqueous solution of an alkaline hydroxide, in concentration between 10 and 30% by weight, preferably 20% sodium hydroxide. A solution 25 of an alkaline sulfide is then added under stirring in a concentration of 1 to 3M, preferably 2M sodium sulfide, maintaining the temperature in a range of from 20 to 80° C. This solution 25 is added until the complete precipitation of all the transition metals present in the solution is obtained, with the exception of the lithium ions. This condition can be determined by methods according to the prior art. Once the solution addition is complete, the suspension is digested for at least 30 minutes, to obtain a clarified solution 26 containing lithium and a precipitate 27. The precipitate 27, containing the metal sulfides, is separated by filtration in a station of filtering 28. From the clarified solution 26, lithium can be recovered by precipitation in the form of carbonate, as follows: the sodium and/or potassium content of the solution is reduced due to the effect of pH and concentration. For example, referring again to Figure 1, the clarified solution 26 can be acidified, preferably with hydrochloric acid 29, to a pH lower than 2, concentrated by evaporation in a special evaporation tank 30, obtaining the precipitation of the sodium and potassium salts 31 from the solution 32 of lithium and sodium or potassium, which are separated by filtration into a filtering station 33. The lithium is finally obtained as carbonate, by hot precipitation in a precipitation reactor 34, following the addition of a solution 35 of sodium or potassium carbonate. The lithium carbonate 36 precipitates at the bottom of the precipitation reactor 34, is separated, by filtration in a filtering station 37, from the mother liquors 38, which can be recycled in the step of precipitation. The lithium carbonate 36 is then purified by recrystallization.

### Example 1

A batch consisting of 136 grams of lithium ion rechargeable cells, two of flat shape and two of cylindrical shape of the ICR18630 type, deprived of their BMS, were immersed in a pot of Dewar (thermally insulated) containing 0.5kg of shavings of bronze for a time equal to 48 hours. The production of heat during the process was monitored by an infrared thermometer. The temperature, starting from a value of 18°C, has increased to a maximum of 26°C in two hours, then decreasing in the following hours. After 24 hours the temperature was around 17°C, indicating the absence of further production of heat and, therefore, the end of the discharge process. The cells were then separated from the filings by sieves and manually disassembled using a circular saw for the removal of plastic and steel hulls. No flames, heat or gas development were detected during this procedure. The internal parts of the cells, composed of anode, cathode and polymeric separators, were cut manually into fragments of about 10mm on each side. The fragments, weighing 106.4g, were placed in a beaker, added with 530mL of a 3M solution of formic acid and heated under stirring for one hour at 60°C, obtaining the detachment of the active materials from the metal collectors. The separation of the suspended powders in solution containing the active metals was obtained through a sieve of appropriate dimensions; the metal collectors of copper and aluminum and the polypropylene separators were then washed, dried and finally weighed.

The weight of this fraction was 34.9g; no evident corrosion was detected on the copper foils, while the surface of the aluminum foils was opaque, thus indicating partial corrosion. The suspension consisting of the active powder and the formic acid solution was then inserted into an etching reactor for the step of dissolution (leaching) and 500mL of concentrated hydrochloric acid (37% by weight) were added and heated up to boiling for un hour under stirring. After this time, the solution was allowed to cool and filtered, separating the insoluble solids in the reaction environment. The solid part, made up entirely of elemental carbon, was dried and weighed, amounting to about 23.8g (about 20% of the weight of the entire black mass). The solution containing the ions of the active metals, called "liquor", had a volume of about 1100mL of volume and was analyzed by ICP-MS (Inductively Coupled Plasma - Mass Spectrometry) to determine the content of metal ions, the results of which are shown in Table 1.

**Table 1 (metal content, expressed in ppm and in% by weight, of the liquor corresponding to the batch treated in Example 1)**

| Metal | Ppm | % by weight |
|---|---|---|
| Li | 2702,5 | 10,50 |
| Al | 367,5 | 1,43 |
| Co | 16845,9 | 65,44 |
| Cu | 159,1 | 0,62 |
| Mn | 3801.5 | 14,77 |
| Ni | 916,9 | 3,56 |
| Fe | 949,0 | 3,69 |

The copper amount is very low, indicating a slight dissolution during the step of detachment of the powders from the collectors, while a not negligible quantity of aluminum in solution has been detected. Subsequently, the "liquor" was heated up to 60°C, the pH increased up to a value of around 5 by means of an aqueous solution of 20% by weight sodium hydroxide (about 190g of equivalent NaOH) and a 2M Na₂S solution was added for the precipitation of all metal ions with the exception of lithium. About 220mL of 2M sodium sulfide solution was needed. The precipitate was then filtered, dried and weighed; about 41.2g of transition metal sulfide were obtained. The aqueous portion, having a volume of 2.2L, containing lithium and sodium ions was acidified to pH 1 with hydrochloric acid and evaporated to about 1/20 of its initial volume, thus obtaining the precipitation of sodium chloride, which was then separated from the mother liquor by filtration and removed. The supernatant, enriched with lithium chloride, was heated up to 90°C, obtaining, by adding 60mL of 40% aqueous potassium carbonate, the precipitation of lithium carbonate, then separated from the mother liquors by filtration . The obtained precipitate, washed with water at boiling temperature and subsequently dried and weighed, amounted to about 13.87g, corresponding to 84% of the lithium contained in the etching liquor. The obtained product was analyzed by ICP-MS. The results are shown in Table 2.

**Table 2 (alkaline impurity content, expressed as% by weight, in the final lithium carbonate obtained in Example 1)**

| Metal | % by weight |
|---|---|
| Li | 94,59 |
| Na | 2,74 |
| K | 2,67 |

### Example 2

A batch consisting of 530.2 grams of primary (non- rechargeable) and secondary (rechargeable) cells of lithium ions, including cells of the CR2 type, cells of flat shape and cells of cylindrical shape ICR18630 type, deprived of their BMS (where present) were immersed in a Dewar vessel (thermally insulated) containing bronze shavings for a period of 48 hours. The production of heat during the process was monitored by an infrared thermometer. The temperature, starting from a value of 17°C, has increased to a maximum of 25°C in three hours, then decreasing in the following hours. After 48 hours the temperature was around 17°C, indicating the absence of further production of heat and, therefore, the end of the discharge process. The thermal energy released by the discharge process amounted to about 6kJ. The cells were then separated from the filings by sieves and manually disassembled using a circular saw for the removal of plastic and steel hulls. No flames, heat or gas development were detected during this process. The internal parts of the cells, composed of anode, cathode and separators, were cut manually into 10mm diameter fragments and left for two hours exposed to an air stream in order to eliminate the organic solvents that make up the electrolyte before proceeding with other treatments. The fragments, weighing 410.5g, were placed in a beaker and added with 2L of a solution of 3M formic acid, heated under stirring for two hours at room temperature (about 18°C), obtaining the detachment of the active materials from metal collectors. Once the detachment was completed, the copper and aluminum metal collectors and the polypropylene separators were separated by a sieve, washed, dried and finally weighed. The weight of this fraction was 127.5g; partial corrosion was detected on the copper foils, while the thickness of the aluminum foils was appreciably reduced, thus indicating substantial corrosion. Furthermore, part of the active powder remained adhered to the surface of the aluminum. The suspension consisting of active powder and the formic acid solution was then inserted into the leaching reactor and added with 1.3L of concentrated hydrochloric acid (37% by weight) and reflow heated for one hour under stirring. After this time, the solution was allowed to cool and filtered, separating the insoluble solids in the reaction environment, which were washed with 400mL of distilled water. The solid part, consisting entirely of elemental carbon, was dried and weighed to a total of about 91.4g (about 25% of the weight of the entire black mass). The etching "liquor" (about 4200mL of volume) was analyzed by ICP-MS (Inductively Coupled Plasma - mass spectrometry) to determine the metallic content; the data are shown in table 3.

**Table 3 (metal content, expressed in ppm and % by weight, of the liquor corresponding to the batch treated in Example 2)**

| Metal | Ppm | % by weight |
|---|---|---|
| Li | 2637,9 | 10,74 |
| Al | 543,6 | 2,21 |
| Co | 14279,4 | 58,15 |
| Cu | 268,7 | 1,09 |
| Fe | 871,1 | 3,55 |
| Mn | 5207,6 | 21,21 |
| Ni | 747,6 | 3,04 |

The phase composed of metal collectors and separators was etched in aqua regia and also analyzed by ICP-MS, with the aim of determining the metallic content; the values are shown in table 4, while the percentage distribution between the two phases, powders and foils, are shown in table 5.

**Table 4 (metal content, expressed in % by weight, in the collecting etching solution of Example 2)**

| Metal | % by weight |
|---|---|
| Li | 1,54 |
| Al | 5,95 |
| Co | 10,24 |
| Cu | 17,41 |
| Fe | 0,75 |
| Mn | 4,04 |
| Ni | 0,73 |

**Table 5 (percentage distribution of the metals in the phases of the powders and the collectors of the Example 2)**

| Metal | Powders phase (%) | Collectors phase (%) |
|---|---|---|
| Li | 85,10 | 14,90 |
| Al | 23,29 | 76,71 |
| Co | 82,26 | 17,74 |
| Cu | 4,88 | 95,12 |
| Fe | 79,28 | 20,72 |
| Mn | 81,10 | 18,90 |
| Ni | 77,27 | 22,73 |

Although the visual inspection showed signs of corrosion on both copper and aluminum, only the latter was detected in appreciable quantities in the "liquor", indicating that copper was only partially etched. It should be noted, however, that part of the active powder remained adhered to the aluminum foils (table 5). The pH of the "liquor" was adjusted around a value of 5 by adding an aqueous solution of 20% by weight sodium hydroxide (about 700g of equivalent NaOH), leading to the precipitation of the aluminum traces, in the form of hydroxides, which were removed by filtration. The metals contained in the liquor (with the exception of lithium) were precipitated by adding a 2M solution of Na₂S at 60°C under stirring until the reaction was complete (further addition of sulfide did not lead to any additional formation of precipitate). About 780mL of 2M sodium sulfide solution was needed. The precipitate was then filtered, dried and weighed; approximately 144.8g of transition metal sulfide were obtained. The aqueous part, having a volume of about 8.0L, containing lithium and sodium ions was acidified to pH 1 with hydrochloric acid and evaporated to about 1/20 of its initial volume, thus obtaining the precipitation of sodium chloride, which was then separated from the mother liquors by filtration and removed. The supernatant, enriched with lithium chloride, was heated up to 90°C, obtaining, by adding 200mL of 40% aqueous potassium carbonate, the precipitation of lithium carbonate, then separated from the mother liquors by filtration. The obtained precipitate, washed with water at boiling temperature and subsequently dried and weighed, amounted to about 50.2g, corresponding to 83.7% of the lithium contained in the etching liquor and to about 71.7% of the content total of lithium contained in the lot. The obtained product was analyzed by ICP-MS. The results are shown in table 6.

**Table 6 (alkaline impurity content in the final lithium carbonate obtained in Example 2, expressed as % by weight)**

| Metal | % by weight |
|---|---|
| Li | 97,38 |
| Na | 1,44 |
| K | 1,17 |

### Example 3

A batch consisting of 365 grams of rechargeable lithium ion cells, two of flat shape and two of cylindrical shape type ICR18630, deprived of their BMS, were immersed in a vase of Dewar (thermally insulated), containing bronze shavings, for a time equal to 48 hours. The production of heat during the process was monitored by an infrared thermometer. The temperature, starting from a value of 21°C, increased to a maximum of 33°C in three hours, then decreasing in the following hours. After 48 hours the temperature was around 19°C indicating the absence of further production of heat and, therefore, the end of the discharge process. The thermal energy released by the discharge process amounted to about 12kJ. The cells were then separated from the filings by means of sieves and manually disassembled, using a circular saw for the removal of plastic and steel hulls, whose weight amounted to 71.3g. No flames, heat or gas development were detected during this procedure. The internal parts of the cells, composed of anode, cathode and separators, were cut manually into 10mm diameter fragments and left for two hours exposed to an air stream in order to eliminate the organic solvents that make up the electrolyte before proceeding further. The fragments weighing 281.3g were placed in a beaker, added with 1.4L of a solution of 3M formic acid, and stirred for one hour at room temperature, obtaining the detachment of the active materials from the metal collectors. Once the detachment was completed, the copper and aluminum metal collectors and the polypropylene separators were separated by a sieve, washed, dried and finally weighed. The weight of this fraction was 94.3g; no evident corrosion was detected on the copper foils, while the surface of the aluminum foils was opaque, thus indicating a possible partial corrosion. Part of the powders had remained attached to the surface of the aluminum and separators. The suspension consisting of the active powder and the formic acid solution was then inserted into the leaching reactor and added with 900 mL of concentrated hydrochloric acid (37% by weight) and reflow heated for one hour under stirring. After this time, the solution was allowed to cool and filtered, separating the insoluble solids from the reaction environment. The solid part, consisting entirely of elemental carbon, was washed with 250mL of water, dried and weighed, amounting to about 54.9g (about 20% of the weight of the entire black mass). The "etching liquor" (about 3L of volume) was analyzed by ICP-MS to determine the metallic content; the data are shown in table 7.

**Table 7 (metallic content (ppm and % by weight) of the liquor corresponding to the batch treated in Example 3)**

| Metal | ppm | % by weight |
|---|---|---|
| Li | 2637,9 | 10,74 |
| Al | 543,6 | 2,21 |
| Co | 14279,4 | 58,15 |
| Cu | 268,7 | 1,09 |
| Fe | 871,1 | 3,55 |
| Mn | 5207,6 | 21,21 |
| Ni | 747,6 | 3,04 |

The phase composed of metal collectors and separators was etched in aqua regia and also analyzed by ICP-MS, in order to determine its metallic content; the values are shown in Table 8, while the percentage distribution between the two phases, powders and foils, are shown in Table 9.

**Tabella 8 (metal content (expressed as % by weight) in the etching solution of the collectors of Example 3)**

| Metal | % by weight |
|---|---|
| Li | 3,01 |
| Al | 16,37 |
| Co | 8,88 |
| Cu | 44,17 |
| Fe | 16,34 |
| Mn | 6,50 |
| Ni | 4,73 |

**Table 9 (percentage distribution of metals in the phases of powders and collectors in Example 3)**

| Metal | Powders phase (%) | Collectors phase (%) |
|---|---|---|
| Li | 88,15 | 11,85 |
| Al | 14,35 | 85,65 |
| Co | 88,25 | 11,75 |
| Cu | 1,91 | 98,09 |
| Fe | 77,16 | 22,84 |
| Mn | 83,26 | 16,74 |
| Ni | 79,19 | 20,81 |

As expected, the copper was not appreciably etched during the step of separation of the powders, while a not negligible quantity of aluminum in solution was detected. It should be noted, however, that part of the active powder remained attached to the aluminum foils (Table 8). The pH of the "liquor" was adjusted around a value of 5 by adding an aqueous solution of 20% by weight sodium hydroxide (about 500g of equivalent NaOH) leading to the precipitation of the traces of aluminum as hydroxides, which were eliminated by filtration. The metals contained in the liquor (with the exception of lithium) were precipitated by adding a solution of Na₂S 2M at 60°C under stirring until the reaction was complete (further addition of sulfide did not lead to further precipitate formation). Approximately 600 mL of 2M sodium sulphide solution were required. The precipitate was then filtered, dried and weighed; approximately 109.1g of transition metal sulfide were obtained. The aqueous portion, having a volume of 5.5L containing lithium and sodium ions was acidified to pH 1 with hydrochloric acid and evaporated to about 1/20 of its initial volume, resulting in precipitation of sodium chloride, which was then separated from the mother liquor by filtration and eliminated. The supernatant, enriched with lithium chloride, was heated up to 90°C, obtaining, by adding 150mL of 40% aqueous potassium carbonate, the precipitation of lithium carbonate, then separated from the mother liquors by filtration. The obtained precipitate, washed with water at boiling temperature and subsequently dried and weighed, amounted to about 39.7g, corresponding to 84.1% of the lithium contained in the etching "liquor" and to approximately 74.6% of the total content of lithium contained in the batch. The obtained product was analyzed by ICP-MS. The results are shown in table 10.

**Table 10 (Na and K content in the final lithium carbonate obtained in Example 3, expressed as% by weight)**

| Metal | % by weight |
|---|---|
| Li | 96,52 |
| Na | 1,84 |
| K | 1,64 |

### References:

1) Journal of Power Sources 177 (2008) 512-527
2) Renewable and Sustainable Energy Reviews, 60, (2016), 195-205
3) a) US20090229413A1; b) US7713396B2; c) US2005/0241943A1; d) JP2005011698A; e) JP4202198B2; f) CN101336496B; g) WO2007088617A1; h) US8858677B2; i) JP4909907B2; j) DE602006013512D1; k) EP1981115B1; l) EP1981115A4; m) EP1981115A1; n) CA2627803A1; o) CA2627803C; p) CN101336496A
4) a) US20050244704A1; b) US8067107B2
5) CN1601805A
6) a) CN101318712A; b) CN101318712B
7) US005185564A
8) US5569996A
9) a) EP2450991A1; b) EP2450991B1
10) WO2005101564A1
11) a) US5882811; b) DE69420438D1; c)DE69420438T2; d)EP0613198A1; e) EP0613198B1, f) US5491037
12) FR2812973A1
13) a) EP1269554B1; b) US7192564; c) WO2002023651A1; d) EP1269554A1; e) US20040028585A1; f) CA2319285A1; g) JP2004508694A; h) US7192564B2
14) a) US6524737B1; b) CA2311792A1; c) EP1041659A1; d) WO2000019557A1
15) Journal of Power Sources 170 (2007) 210-215
16) Journal of Power Sources 240 (2013) 766-771
17) a) US6261712B1; b) JP2000015216A; c) JP4144820B2
18) JP2001185241A; b) JP4358954B2
19) CN104600389A
20) a) JPH10158751A; b) JP3563897B2
21) a) JPH11185833; b) JP3450684B2
22) JPH10287864A
23) a) CN101346851A; b) CA2627734C; c) JP5007240B2; d) US 2009/0272650A1; e) JPWO2007/074513A1; f) CA2627734A1; g) EP1968154A4; h) EP1968154A1; i) EP1968154B1; j) US 2013/00062220A1; k) CN101346851B
24) a) CN102956935A; b) CN102956935B
25) a) CN102956936B; d) CN102956936B
26) EP1009058A1
27) a) CN101509071A; b) CN101509071B; c) KR101036407B1; d) KR20090087801A; e) JP4865745B2; f) JP2009193778A
28) a) US 2005/0235775A1 ; b) US7169206B2
29) a) CN102903985A ; b) CN102903985B
30) a) CN102891345A ; b) CN102891345B
31) a) US6514311B1; b) JP2003157913A; c) JP3675392B2
32) JP2003-272720A
33) a) CN101692510A; b) CN101692510B
34) a) CN101921917A; b) CN101921917B
35) CN101969148A
36) a) CN102569940A; b) CN102569940B
37) a) US6511639B1; b) CA2309773A1; c) CN1275821A; d) DE19924707A1; e) EP1056146A1
38) a) US5888463A; b) CA2257560A1
39) a) CN102676822A ; b) CN102676822B; c) JP5766305B2; d) US20130326850A1; e) EP2684622B1; f) EP2684622A4; g) KR20140006968A; h) KR101570780B1; i) EP2684622A1; j) US9114445B2; k) JP2014510195A; l) WO2012122774A1
40) CN102208706A
41) CN101071893A
42) US20130302226A1
43) Journal of Power Sources 92, (2001), 65-69
44) a) JP2014199776A; b) JPS5706460B2
45) Waste Management, 34, (2014), 715-1724
46) CN103641175A
47) a) US20100012149A1; b) US8404138B2; c) KR101097555B1; d) CN101617435B; e) KR20100002250A; f) EP2113138A1; g) EP2113138B1; h) CA2678545A1; i) CA2678545C; j) JP4406845B2; k) WO2008102240A1; l) CN101617435A; m) JP2008204755A
48) JPA9195071
49) 1020040067481B1 (Korean patent)
50) a) CN103413990A; b) CN103413990B
51) a) CN101942569A; b) CN101942569B
52) a) CN101871048A; b) CN101871048B
53) Green Energy & Environment 2, (2017), 42-50
54) a) CN102285673A; b) CN102285673B
55) a) CN103594754A; b) CN103594754B
56) CN1601806A
57) CN191871048B
58) a) US2014/0377154A1; b) US9187804B2; c) WO2013114621A1; d) EP2811040A1; e) CN104080932A; f) EP2811040A4
59) a) CN103326088A; b) CN103326088B
60) CN101555030A
61) CN192903985B
62) Journal of Hazardous Materials, 176, (2010), 288-293
63) a) CN103199320A; b) CN103199320B; c) WO2014154152A1

## Claims

1. Method for treatment of lithium batteries and recovery of the metals contained therein comprising the following steps:
- completely discharging the single cells by immersion in a conductive solid material;
- separating black mass from metal shells,
- removing active powder from metal collectors and from separating membranes, non-destructive to the latter, by immersion of black mass in an aqueous solution of a weak organic acid;
- recovering and separating metal collectors and separating membranes from active powder by sieving;
- dissolving, by leaching, the metals from active powder by using a detachment acid solution, by adding a stronger acid; heating and subsequent filtration of the leachate to remove insoluble parts;
- precipitation of the transition metals contained in the leachate as sulfides by adjusting the pH and adding a solution of a source of sulfide ions, preferably an alkaline sulfide;
- filtering, washing and recovering the precipitate;
- acidification of the lithium solution with strong acids, evaporation and precipitation of sodium and potassium salts;
- filtering sodium and potassium salts to obtain only lithium in the solution;
- lithium precipitation as lithium carbonate, by adding an alkaline carbonate;
- washing the lithium carbonate precipitate with hot water to obtain a purified product.

2. Method for treatment of lithium batteries and recovery of the metals contained therein according to claim 1, **characterised in that** said solid electric conductor is composed of copper, bronze, brass, iron or steel, aluminum, carbon.

3. Method for treatment of lithium batteries and recovery of the metals contained therein according to claim 1 or 2, **characterised in that** said step of separating black mass from metal shells is achieved by manual opening, grinding, cutting or fragmentation.

4. Method for treatment of lithium batteries and recovery of the metals contained therein according to any one of the preceding claims, **characterised in that** said aqueous solution of a weak organic acid used in said step of removing active powder from metal collectors and from separating membranes is constituted by formic acid in a concentration range comprised between 0,5 and 8M in a concentration range comprised between 4:1 and 10:1 with respect to the black mass; preferably at a temperature comprised between 10 and 80°C, with stirring, for a period comprised between 30 and 240 minutes.

5. Method for treatment of lithium batteries and recovery of the metals contained therein according to any one of the preceding claims, **characterised in that** said step of leaching provides for the addition of chloridric acid, in such an amount to reach a concentration comprised between 3 and 6 M in solution, preferably at boiling temperature, for a period not shorter than 30 min.

6. Method for treatment of lithium batteries and recovery of the metals contained therein according to any one of the preceding claims, **characterised in that** in said step of precipitation of the transition metals, the pH of the solution is adjusted in a range comprised between 5 and 7 by the addition of a solution of an alkaline hydroxide in a concentration comprised between 10 and 30%.

7. Method for treatment of lithium batteries and recovery of the metals contained therein according to claim 6, **characterised in that** said step of precipitation of the transition metals is achieved by operating at a temperature comprised between 20 and 80°C.

8. Method for treatment of lithium batteries and recovery of the metals contained therein according to claim 1, **characterised in that** said step of acidification of the lithium solution with strong acids involves the pH change to a value lower than 2.

9. Method for treatment of lithium batteries and recovery of the metals contained therein according to claim 1, **characterised in that** said step of precipitation of lithium as carbonate is operated at a temperature comprised between 70 °C and the boiling temperature.

## Patentansprüche

1. Verfahren zur Behandlung von Lithiumbatterien und Rückgewinnung der darin enthaltenen Metalle, dass die folgenden Schritte umfasst:
- vollständige Entladung der einzelnen Zellen durch Eintauchen in ein leitfähiges festes Material;
- die schwarze Masse von den Metallschalen zu trennen,
- Entfernung des aktiven Pulvers von Metallkollektoren und von Trennmembranen, ohne diese zu zerstören, durch Eintauchen der schwarzen Masse in eine wässrige Lösung einer schwachen organischen Säure;
- Rückgewinnung und Abtrennung von Metallsammlern und Abtrennung von Membranen aus aktivem Pulver durch Sieben;
- Lösen der Metalle aus dem aktiven Pulver durch Auslaugen unter Verwendung einer sauren Ablöselösung durch Zugabe einer stärkeren Säure; Erhitzen und anschließendes Filtrieren der Auslaugung zur Entfernung der unlöslichen Teile;
- Ausfällung der im Sickerwasser enthaltenen Übergangsmetalle als Sulfide durch Einstellung des pH-Wertes und Zugabe einer Lösung einer Sulfidionenquelle, vorzugsweise eines alkalischen Sulfids;
- Filtrieren, Waschen und Rückgewinnung des Niederschlags;
- Ansäuern der Lithiumlösung mit starken Säuren, Verdampfung und Ausfällung von Natrium- und Kaliumsalzen;
- Filtern von Natrium- und Kaliumsalzen, um nur Lithium in der Lösung zu erhalten;
- Lithiumausfällung als Lithiumcarbonat durch Zugabe eines Alkalicarbonats;
- Waschen des Lithiumcarbonat-Niederschlags mit heißem Wasser, um ein gereinigtes Produkt zu erhalten.

2. Verfahren zur Behandlung von Lithiumbatterien und Rückgewinnung der darin enthaltenen Metalle nach Anspruch 1, **dadurch gekennzeichnet, dass** der feste elektrische Leiter aus Kupfer, Bronze, Messing, Eisen oder Stahl, Aluminium, Kohlenstoff besteht.

3. Verfahren zur Behandlung von Lithiumbatterien und Rückgewinnung der darin enthaltenen Metalle nach Anspruch 1 oder 2, **dadurch gekennzeichnet, dass** der Schritt der Trennung der schwarzen Masse von den Metallhüllen durch manuelles Öffnen, Zerkleinern, Schneiden oder Fragmentieren erfolgt.

4. Verfahren zur Behandlung von Lithiumbatterien und Rückgewinnung der darin enthaltenen Metalle nach einem der vorhergehenden Ansprüche, **dadurch gekennzeichnet, dass** die wässrige Lösung einer schwachen organischen Säure, die in dem Schritt der Entfernung des aktiven Pulvers von den Metallsammlern und von den Trennmembranen verwendet wird, aus Ameisensäure in einem Konzentrationsbereich zwischen 0,5 und 8M in einem Konzentrationsbereich zwischen 4:1 und 10:1, bezogen auf die schwarze Masse, besteht; vorzugsweise bei einer Temperatur zwischen 10 und 80 °C, unter Rühren, für eine Dauer zwischen 30 und 240 Minuten.

5. Verfahren zur Behandlung von Lithiumbatterien und zur Rückgewinnung der darin enthaltenen Metalle nach einem der vorhergehenden Ansprüche, **dadurch gekennzeichnet, dass** der Schritt des Auslaugens die Zugabe von Chlorsäure in einer solchen Menge vorsieht, dass eine Konzentration zwischen 3 und 6 M in Lösung erreicht wird, vorzugsweise bei Siedetemperatur, für eine Dauer von nicht weniger als 30 min.

6. Verfahren zur Behandlung von Lithiumbatterien und zur Rückgewinnung der darin enthaltenen Metalle nach einem der vorhergehenden Ansprüche, **dadurch gekennzeichnet, dass** in dem Schritt der Ausfällung der Übergangsmetalle der pH-Wert der Lösung in einem Bereich zwischen 5 und 7 durch Zugabe einer Lösung eines alkalischen Hydroxids in einer Konzentration zwischen 10 und 30% eingestellt wird.

7. Verfahren zur Behandlung von Lithiumbatterien und zur Rückgewinnung der darin enthaltenen Metalle nach Anspruch 6, **dadurch gekennzeichnet, dass** der Schritt der Ausfällung der Übergangsmetalle durch Arbeiten bei einer Temperatur zwischen 20 und 80 °C erreicht wird.

8. Verfahren zur Behandlung von Lithiumbatterien und zur Rückgewinnung der darin enthaltenen Metalle nach Anspruch 1, **dadurch gekennzeichnet, dass** der Schritt des Ansäuerns der Lithiumlösung mit starken Säuren die Änderung des pH-Wertes auf einen Wert unter 2 beinhaltet.

9. Verfahren zur Behandlung von Lithiumbatterien und Rückgewinnung der darin enthaltenen Metalle nach Anspruch 1, **dadurch gekennzeichnet, dass** der Schritt der Ausfällung von Lithium als Carbonat bei einer Temperatur zwischen 70 °C und der Siedetemperatur durchgeführt wird.

## Revendications

1. Procédé de traitement des piles au lithium et de récupération des métaux qu'elles contiennent, comprenant les étapes suivantes:
- décharger complètement les cellules individuelles par immersion dans un matériau solide conducteur;
- séparer la masse noire des coquilles métalliques,
- éliminer la poudre active des collecteurs métalliques et des membranes de séparation, de manière non destructive pour ces dernières, par immersion de la masse noire dans une solution aqueuse d'un acide organique faible;
- récupération et séparation des collecteurs métalliques et des membranes de séparation de la poudre active par tamisage;
- dissoudre, par lixiviation, les métaux de la poudre active en utilisant une solution acide de détachement, en ajoutant un acide plus fort; chauffer et filtrer ensuite le lixiviat pour éliminer les parties insolubles;
- précipitation des métaux de transition contenus dans le lixiviat sous forme de sulfures en ajustant le pH et en ajoutant une solution d'une source d'ions sulfure, de préférence un sulfure alcalin;
- filtrer, laver et récupérer le précipité;
- acidification de la solution de lithium avec des acides forts, évaporation et précipitation des sels de sodium et de potassium;
- filtrer les sels de sodium et de potassium pour n'obtenir que du lithium dans la solution;
- précipitation du lithium sous forme de carbonate de lithium, par l'ajout d'un carbonate alcalin;
- laver le précipité de carbonate de lithium avec de l'eau chaude pour obtenir un produit purifié.

2. Procédé de traitement des piles au lithium et de récupération des métaux qu'elles contiennent selon la revendication 1, **caractérisé par le fait que** ledit conducteur électrique solide est composé de cuivre, de bronze, de laiton, de fer ou d'acier, d'aluminium, de carbone.

3. Procédé de traitement des piles au lithium et de récupération des métaux qu'elles contiennent selon la revendication 1 ou 2, **caractérisé par le fait que** cette étape de séparation de la masse noire des coquilles métalliques est réalisée par ouverture manuelle, broyage, découpage ou fragmentation.

4. Procédé de traitement des batteries au lithium et de récupération des métaux qu'elles contiennent selon l'une quelconque des revendications précédentes, **caractérisé en ce que** ladite solution aqueuse d'un acide organique faible utilisée dans ladite étape d'élimination de la poudre active des collecteurs de métaux et des membranes de séparation est constituée par de l'acide formique dans une gamme de concentration comprise entre 0,5 et 8M dans une gamme de concentration comprise entre 4:1 et 10:1 par rapport à la masse noire; de préférence à une température comprise entre 10 et 80 °C, sous agitation, pendant une durée comprise entre 30 et 240 minutes.

5. Procédé de traitement des piles au lithium et de récupération des métaux qu'elles contiennent selon l'une quelconque des revendications précédentes, **caractérisé en ce que** ladite étape de lixiviation prévoit l'ajout d'acide chlorhydrique, en quantité telle qu'il atteigne une concentration comprise entre 3 et 6 M en solution, de préférence à température d'ébullition, pendant une durée qui n'est pas inférieure à 30 min.

6. Procédé de traitement des piles au lithium et de récupération des métaux qu'elles contiennent selon l'une quelconque des revendications précédentes, **caractérisé en ce que** dans ladite étape de précipitation des métaux de transition, le pH de la solution est ajusté dans une plage comprise entre 5 et 7 par l'addition d'une solution d'hydroxyde alcalin à une concentration comprise entre 10 et 30%.

7. Procédé de traitement des piles au lithium et de récupération des métaux qu'elles contiennent selon la revendication 6, **caractérisé par le fait que** cette étape de précipitation des métaux de transition est réalisée en opérant à une température comprise entre 20 et 80 °C.

8. Procédé de traitement des piles au lithium et de récupération des métaux qu'elles contiennent selon la revendication 1, **caractérisé par le fait que** l'étape d'acidification de la solution de lithium avec des acides forts implique le changement du pH à une valeur inférieure à 2.

9. Procédé de traitement des piles au lithium et de récupération des métaux qu'elles contiennent selon la revendication 1, **caractérisé par le fait que** cette étape de précipitation du lithium sous forme de carbonate est opérée à une température comprise entre 70 °C et la température d'ébullition.
